# EUROPEAN PATENT APPLICATION

(11) **EP 1 659 761 A1**
(43) Date of publication of application: **24.05.2006**
(21) Application number: 04292736.8
(22) Date of filing: 18.11.2004
(51) Int. Cl.: H04L 29/12, H04L 29/06

(54) **Address translation method for unicast stream and device implementing the method**

(71) Applicant: Thomson Licensing, 92100 Boulogne (FR)
(72) Inventor: Leyendecker, Philippe, 92100 Boulogne Billancourt (FR); Zwing, Rainer, 92100 Boulogne Billancourt (FR)
(74) Representative: Benezeth, Philippe J.L. M.

(57) **Abstract**

The current invention proposes a mechanism that is implemented in the DNG (1.2) so as to allow unicast UDP streams between the DVB-IP server (1.2) and the DVB-IP client (1.6) to pass through the DNG. For that, the invention also proposes a mean for an automatic modification of the RTSP messages in the DNG, in order to have the DVB-IP server discuss only with the DNG and then the DNG retransmits the information from the DVB-IP server to the right DVB-IP client.

## Description

The present invention takes place in the domain of transmission of digital service over IP network and in particular in the way for a client on a home or local network to access services distributed over an IP distribution network.

The DVB-IP architecture relies on the fact that the server and the clients are on the same network (no address translation is defined in the DVB-IP specification). This requirement is very strong as it makes it difficult to use a DVB-IP architecture across different networks.

When thinking about integrating DVB-IP into the home network, of course there is need to cope with that limiting DVB-IP requirement as the home network is a private network that exists next to the public access network where the DVB-IP architecture can be deployed.

The delivery Network Gateway (DNG) reference 1.4 is the equipment that makes the interface between the private home network 1.5 and the outside where the DVB-IP server 1.1 is located. The first thing to do in order to allow DVB-IP clients to discuss with the DVB-IP server is to add a dynamic Network Address Translation mechanism (NAT) on the DNG.

The behavior of a dynamic NAT is something well-known (that is therefore not described here) and it basically allows to create connections between the DVB-IP server and the DVB-IP clients as if they were on the same network. The main goal of NAT is therefore to make transparent the use of 2 different networks. The NAT process is totally handled by the DNG and when a connection is initiated from within the private network using TCP, the DNG will remember how it mangled the packets of the connection so that packets traveling in both directions will always reach the good end. But when connections are issued from the outside network, using TCP or UDP, the NAT process must be configured so that he knows which is the correct destination inside the private network based on information like port, protocol, ... But these configuration rules has be setup by hand through a complex process that a basic user could not handle easily.

In a classical DVB-IP architecture, TCP is used only for control messages (by using RTSP) whereas UDP is used for streaming video. Moreover DVB-IP uses both multicast and unicast streams therefore there is need for the DNG to allow the correct forwarding of both multicast streams and unicast streams.

For multicast services, as long as the DNG allows multicast streams and behaves correctly with them (that is translate the client address of the IGMP messages), multicast services will be delivered normally by the DVB-IP server to the DVB-IP client.

For unicast services sent over UDP (there is no issue with TCP as the classical dynamic NAT mechanism will work correctly), the DNG needs to relay the client messages from the DVB-IP client to the DVB-IP server and to relay the Video service packets from the DVB-IP server to the right DVB-IP client that asked for the service.

Moreover, when RTSP messages are sent by the DVB-IP client, the DNG receives them (as it is the default gateway for the DVB-IP client) and by using the classic NAT mechanism (Source NAT or *masquerading*) it only modifies the source IP address (IP layer) and the client port (TCP layer) but does not interpret or modify the payload.

This means that when a DVB-IP client request a content using RTSP (identified by their RTSP URL in the RTP payload of the RTSP SETUP message) on a specific port number (identified by the client-port information in the RTSP payload of the RTSP SETUP message), then the DVB-IP server will initiate a UDP stream with a destination address being the one of the DNG (since the NAT mechanism replaced the DVB-IP clients addresses with it). The problem is that the destination port indicated in the RTSP SETUP message must be configured on the DNG so that packets will be forwarded (Destination NAT) to the correct destination inside the home network.

Moreover, if two different DVB-IP clients request different contents on the same port number, then the DVB-IP server will either refuse to send two different contents to the same address (which is the public address of the DNG) with the same port or either accept it but then when it receives video packets from both services, the DNG will have no mean to tell which packets belong to which service on top of not knowing to which clients the packets must be forwarded !

The current invention proposes a mechanism that is implemented in the DNG so as to allow unicast UDP streams between the DVB-IP server and the DVB-IP client to pass through the DNG. For that, the invention also proposes a mean for an automatic modification of the RTSP messages in the DNG, in order to have the DVB-IP server discuss only with the DNG and then the DNG retransmits the information from the DVB-IP server to the right DVB-IP client.

More advantages of the invention will appear through the description of a particular, non-restricting embodiment of the invention. The embodiment will be described with reference to the following figures:
Figure 1 describes the technical context of the invention.
Figure 2 describes the software architecture of the DNG

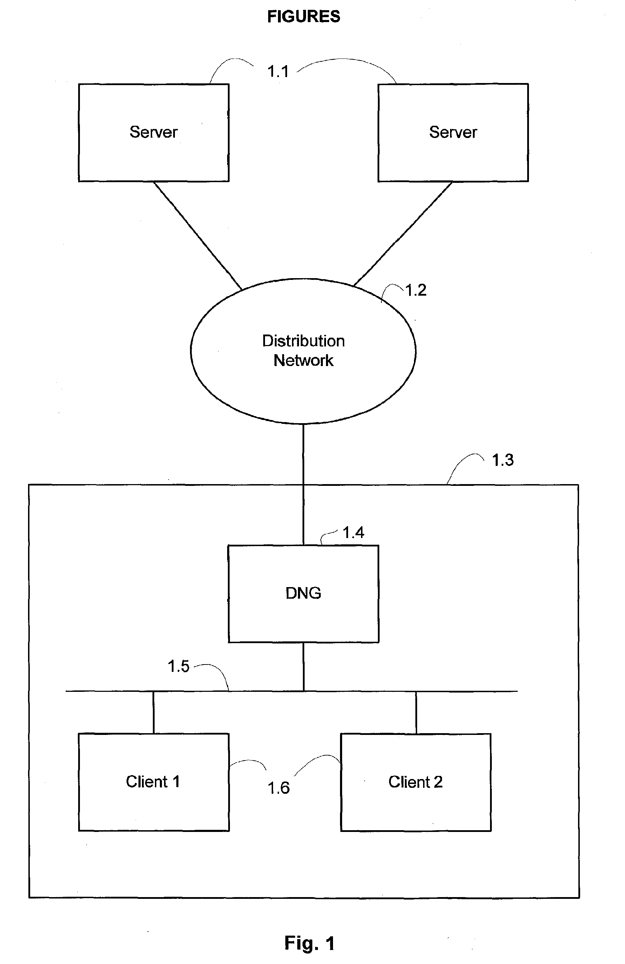

The example of embodiment of the invention takes place in an architecture as described figure 1. Digital services servers 1.1 are connected by a distribution IP network 1.2 to a home 1.3. A DNG 1.4 is acting as a gateway between the distribution network 1.4 and the home local network 1.5 where clients 1.6 are connected.

The example of embodiment of the invention proposes to add a "RTSP snooping" mechanism on the DNG that provides the following actions:
- for all RTSP packets received from a DVB-IP client, the DNG inspects the RTSP payload so as to detect SETUP messages,
- for all RTSP SETUP packets received from a DVB-IP client, the DNG slightly updates the payload by modifying the "client port" information from the initial value asked by the DVB-IP client (let's note this port PORT_HNED) to a new and unique value decided by the DNG that the DNG will only use for the current DVB-IP service and the current DVB-IP client (let's note this port PORT_DNG_HNED).

The DNG maintains the following list of value (IP address of the DVB-IP client - PORT_DNG_HNED - PORT_HNED - CSeq - Session) and configures the NAT thanks to the first three values so that when it receives a video packet on port PORT_DNG_HNED, the NAT mechanism automatically forwards the video packet to the DVB-IP client on the port PORT_HNED. The Cseq recorded by the DNG corresponds to the Cseq used in the RTSP SETUP message. The Session info will be recorded later.

At that time, all RTSP SETUP messages are now transferred to the RTSP server (DVB-IP server) with a port that the DNG has registered in its NAT. If the RTSP server accepts to deliver the media content requested it will send a RTSP OK response with a session number. There is need for the DNG to know this session number as it is the only way that the DNG will later identify that a DVB-IP client requests the termination of a session. Hence the example of embodiment of the invention proposes this second "RTSP snooping" mechanism on the DNG that provides the following actions:
- for all RTSP packets received from the DVB-IP server, the DNG inspects the RTSP payload so as to detect the RTSP OK response related to the RTSP SETUP request. It can be easily identified because it uses the Cseq value recorded earlier.
- Once the RTSP OK response is detected, the DNG reads in it the Session value and updates its internal recording with it.

Now the DNG is able to detect when a client requests a session termination. Hence the following "RTSP snooping" mechanism:
for all RTSP packets received from a DVB-IP client, the DNG inspects the RTSP payload so as to detect TEARDOWN messages,
the DNG retrieves the session number from the TEARDOWN message and uses it so as to retrieve the values (IP address of the DVB-IP client - PORT_DNG_HNED - PORT_HNED) and configures the NAT so as to remove the translation rule created when the session was created.

With the modification described in this invention, the RTSP server only discusses with the DNG and the DNG uses a classic Destination NAT mechanism so as to relay the right media services packets to the right DVB-IP client. Moreover, the NAT table is dynamically maintained up-to-date by snooping the RTSP messages.

The snooping mechanism and the table can be added in the NAT software of the DNG using the processor and the memory of the DNG to store the list it has to maintain.

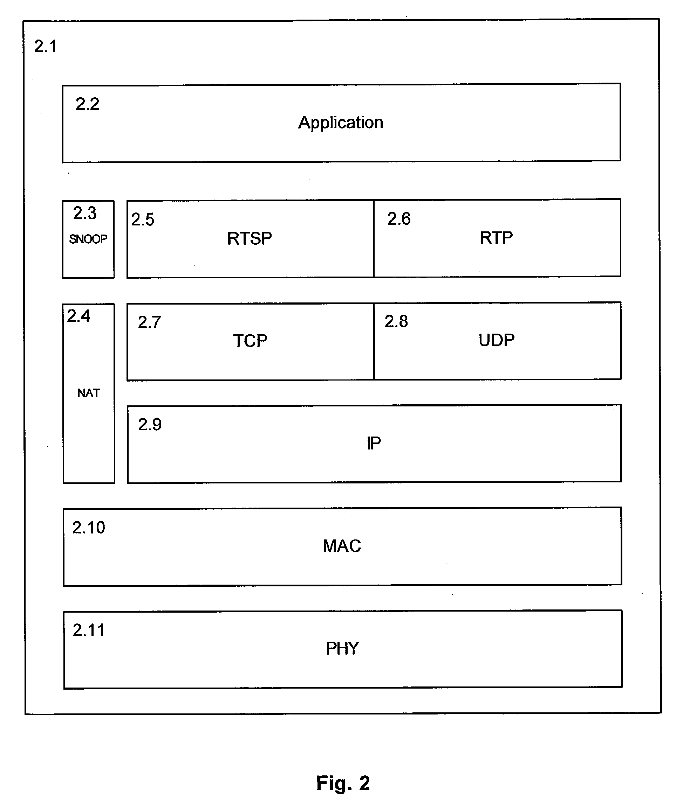

Figure 2 describes an example of software architecture of the DNG. It describes the Physical layers 2.11 acting as interface with the local network and the distribution network. On the physical layer we have the MAC layer 2.10 on top of which is the IP layer 2.9. On top of the IP layer we have the TCP 2.7 and UDP 2.8 on top of which we have RTSP 2.5 and RTP 2.6. The application layer 2.2 is at the top of the stack. The NAT mechanism 2.4 works at the level of the IP, TCP and UDP level. The RTSP snooping module itself 2.3 is working at the level of RTSP.

The man skilled in the art can find references paper on the cited protocols in the following standards :
DVB-IP : standard ETSI : TS 102.034
RTP : standard IETF : RFC1889 & RFC3550
UDP : standard IETF : RFC768
TCP : standard IETF : RFC793
NAT : standard IETF : RFC1631 & RFC2663
RTSP : standard IETF : RFC2326

## Claims

1. Method of translation of addresses in a device connecting a local IP network and a distribution IP network and implementing some Network Translation Address between both networks
**characterized in that** it comprises the following steps:
when detecting a SETUP RTSP packet from the local network to the distribution network to :
- to change the client port in the payload of the SETUP RTSP packet by a unique port allocated by the device ;
- to store a record of at least the IP address of the client, the allocated port, the initial requested client port and the client sequence number CSeq provided by the client;
when detecting a OK RTSP packet corresponding to the recorded CSeq from the distribution network to the local network to :
- to add to the record identified by the CSeq number the session number allocated by the server;
when detecting a TEARDOWN RTSP packet corresponding to the previously recorded session from the distribution network to the local network to:
- to remove the record identified by the session number stored in the TEARDOWN packet
when detecting a packet from the distribution network to the device having as a destination port one of the allocated port in one of the stored record to transmit it to the recorded client on the recorded client port.

2. Device connecting a local IP network and a distribution IP network comprising network addresses translation mechanism and **characterized in that** it further comprises some snooping means to detect RTSP traffic between the local network and the distribution network and recording means to store at least the following data relating to an RTSP session from a client on the local network and a server on the distribution network :
- The IP address of the client ;
- A unique port number allocated by the device ;
- The initial port number requested by the client ;
- The unique RTSP session number identifying the session between the client and the server.
